# EUROPÄISCHE PATENTSCHRIFT

(11) **EP 3 501 955 B1**
(45) Veröffentlichungstag und Bekanntmachung des Hinweises auf die Patenterteilung: **25.03.2020**
(21) Anmeldenummer: 18212874.4
(22) Anmeldetag: 17.12.2018
(51) Int. Cl.: B62D 35/00

(54) **SEITENSPOILER FÜR EIN KRAFTFAHRZEUG**
SIDE SPOILER FOR A MOTOR VEHICLE
DÉFLECTEUR LATÉRAL POUR UN VÉHICULE AUTOMOBILE

(30) Priorität: 22.12.2017 DE 202017107848 U
(43) Veröffentlichungstag der Anmeldung: 26.06.2019
(73) Patentinhaber: REHAU AG + Co, 95111 Rehau (DE)
(72) Erfinder: Krist, Matthias, 95189 Köditz (DE); Czepa, Helmut, 95671 Bärnau (DE)

(56) Entgegenhaltungen:
- EP-A1- 1 845 012
- EP-A1- 2 464 542
- WO-A1-2016/102059
- DE-A1- 19 730 095
- DE-A1-102014 017 606

## Beschreibung

Die vorliegende Erfindung betrifft einen Seitenspoiler für ein Kraftfahrzeug mit einem schalenartigen, die Außenkontur bildenden Spoilerelement, wobei das Spoilerelement eine Sichtseite und eine dieser gegenüberliegende Innenseite aufweist, und mit einem auf der Innenseite angeordneten und mit dem Spoilerelement verbindbaren Trägerelement zur Befestigung an der Karosserie oder einem weiteren Anbauteil des Kraftfahrzeuges, wobei das Spoilerelement und das Trägerelement länglich ausgebildet sind, wobei das Spoilerelement entlang seiner Längsseiten einen ersten Seitenrand und einen diesem gegenüberliegenden zweiten Seitenrand aufweist, wobei der erste Seitenrand zumindest abschnittsweise durch einen Umbug gebildet ist, der mit der Innenseite eine Hinterschneidung bildet, und wobei der zweite Seitenrand durch einen von der Innenseite abstehenden Flansch gebildet ist und, wobei sich das Trägerelement im verbundenen Zustand zumindest abschnittsweise von dem ersten Seitenrand zu dem zweiten Seitenrand erstreckt, wobei das Trägerelement hierbei mit wenigstens einem Anlagebereich über die Hinterschneidung formschlüssig mit dem ersten Seitenrand verbunden ist.

Ein gattungsgemäßer Seitenspoiler kann der Offenlegungsschrift WO 2016/102059 A1 entnommen werden. Nachteilig an einem aus dem Stand der Technik bekannten Seitenspoiler ist, dass zum Lösen der Verbindung zwischen dem Spoilerelement und dem Trägerelement das Trägerelement von der Karosserie des Fahrzeuges, an dem es montiert ist, gelöst werden muss, bevor man an die Verbindungspunkte zwischen Spoilerelement und Trägerelement gelangen kann.

Aufgabe der vorliegenden Erfindung ist es daher ein Seitenspoilerelement anzugeben, bei welchem sich das Spoilerelement und das Trägerelement vereinfacht miteinander verbinden und wieder voneinander lösen lassen.

Diese Aufgabe wird gelöst durch einen Seitenspoiler für ein Kraftfahrzeug mit einem schalenartigen, die Außenkontur bildenden Spoilerelement, wobei das Spoilerelement eine Sichtseite und eine dieser gegenüberliegende Innenseite aufweist, und mit einem auf der Innenseite angeordneten und mit dem Spoilerelement verbindbaren Trägerelement zur Befestigung an der Karosserie oder einem weiteren Anbauteil des Kraftfahrzeuges, wobei das Spoilerelement und das Trägerelement länglich ausgebildet sind, wobei das Spoilerelement entlang seiner Längsseiten einen ersten Seitenrand und einen diesem gegenüberliegenden zweiten Seitenrand aufweist, wobei der erste Seitenrand zumindest abschnittsweise durch einen Umbug gebildet ist, der mit der Innenseite eine Hinterschneidung bildet, und wobei der zweite Seitenrand durch einen von der Innenseite abstehenden Flansch gebildet ist und, wobei sich das Trägerelement im verbundenen Zustand zumindest abschnittsweise von dem ersten Seitenrand zu dem zweiten Seitenrand erstreckt, wobei das Trägerelement hierbei mit wenigstens einem Anlagebereich über die Hinterschneidung formschlüssig mit dem ersten Seitenrand verbunden ist, wobei das Trägerelement zusätzlich formschlüssig mit dem zweiten Seitenrand verbunden ist, wobei hierfür wenigstens ein Fixierelement, das von dem Flansch absteht und mit der Innenseite einen Kanal bildet, und wenigstens ein an dem Trägerelement ausgebildetes und in dem Kanal aufgenommenes Fixiergegenelement vorgesehen ist, wodurch das Spoilerelement und das Trägerelement in einer einzigen Fügerichtung miteinander verbindbar sind und, wobei an einem zwischen dem ersten Seitenrand und dem zweiten Seitenrand des Spoilerelements befindlichen dritten Seitenrand ein von der Innenseite abstehender Abschlussflansch vorgesehen ist, wobei der Abschlussflansch ein Rastgegenelement für ein an dem Trägerelement ausgeformtes Rastelement (10a) bildet oder dieses aufweist, sodass über die durch das Rastelement und das Rastgegenelement gebildete Rastverbindung das Trägerelement in dem Spoilerelement fixiert ist.

Die erfindungsgemäße Ausbildung des Seitenspoilers ermöglicht es das Spoilerelement und das Trägerelement in nur einer einzigen Fügerichtung durch Ineinanderschieben miteinander zu verbinden und aufgrund der besseren Zugänglichkeit zu dem zwischen den beiden Seitenrändern befindlichen dritten Seitenrand auch wieder zu lösen. Dies erlaubt eine gegenüber dem Stand der Technik verbesserte Demontierbarkeit des Seitenspoilers.

Das Trägerelement ist bevorzugt einteilig oder einstückig ausgebildet kann jedoch auch mehrteilig ausgebildet sein.

Das Trägerteil kann wenigstens ein Dichtelement und/oder wenigstens eine Weichkomponente zur Dichtung oder zur Anlage an der Karosserie oder einem weiteren Anbauteil des Kraftfahrzeuges aufweisen. Das Dichtelement und/oder die Weichkomponente ist/sind bevorzugt im Mehrkomponentenspritzguss einstückig mit dem Trägerteil ausgebildet.

Der Kanal kann im Querschnitt U-förmig oder V-förmig ausgebildet sein. Auch eine Mischform zwischen U-förmig und V-förmig ist denkbar.

Das Spoilerelement kann wenigstens einen Anschlag und das Trägerelement wenigstens einen mit dem Anschlag zusammenwirkenden Gegenanschlag aufweisen. Der Anschlag und der mit ihm zusammenwirkende Gegenanschlag verhindern, dass die Rastverbindung über den eigentlichen Rastpunkt hinaus zusammengesteckt werden kann und dient als ein definiertes Gegenlager zu der Rastverbindung.

Bevorzugt weist der Abschlussflansch wenigstens eine Unterbrechung auf, die einen Zugang zu der durch das Rastelement und das Rastgegenelement gebildeten Rastverbindung ermöglicht, um diese von außen lösen zu können. Insbesondere ermöglicht die Unterbrechung einen Zugang zu der Rastverbindung, um diese mit einem Werkzeug lösen zu können.

Das Spoilerelement und/oder das Trägerelement können als Kunststoff-Spritzgussteile ausgebildet sein. Alternativ können das Spoilerelement und/oder das Trägerelement in einem generativen Verfahren (z.B. im 3D-Druck) hergestellt sein.

Das Spoilerelement und/oder das Trägerelement ist oder sind bevorzugt länglich und auf eine Spitze zulaufend ausgebildet. Der dritte Seitenrand ist bevorzugt der der Spitze gegenüberliegende Rand des Spoilerelements.

Teil der Erfindung ist ferner ein Hauptspoiler mit wenigstens einem mit diesem verbundenen vorstehend beschriebenen Seitenspoiler, insbesondere einem Seitenspoiler nach einem der Ansprüche 1 bis 7, sowie ein Kraftfahrzeug mit einem wie vorstehend beschriebenen Seitenspoiler, insbesondere einem Seitenspoiler nach einem der Ansprüche 1 bis 7 oder mit einem Hauptspoiler nach Anspruch 8.

Im Folgenden wird die Erfindung anhand lediglich Ausführungsbeispiele darstellender Figuren näher erläutert. Gleiche oder funktionsgleiche Elemente sind mit den gleichen Bezugszeichen versehen.

Es zeigen:
- Fig. 1: eine dreidimensionale Darstellung eines Spoilerelements mit Sicht auf die Innenseite;
- Fig. 2: eine dreidimensionale Darstellung eines Trägerelements mit Sicht auf dessen im verbindungszustand der Innenseite des Spoilerelement gegenüberliegende Rückseite;
- Fig. 3: eine dreidimensionale Darstellung eines Seitenspoilers für ein Kraftfahrzeug mit dem Spoilerelement und mit dem mit dem Spoilerelement verbundenen Trägerelement;
- Fig. 4: eine vergrößerte Schnittdarstellung gemäß Schnittlinie S in Fig. 3;
- Fig. 5: eine weitere dreidimensionale Darstellung eines Seitenspoilers für ein Kraftfahrzeug mit dem Spoilerelement und mit dem mit dem Spoilerelement verbundenen Trägerelement.

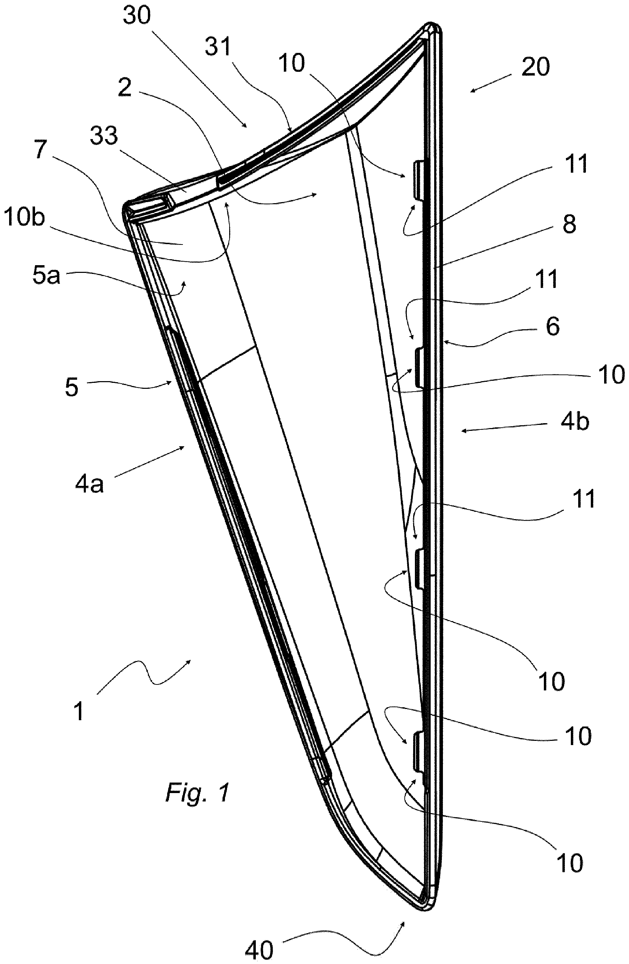

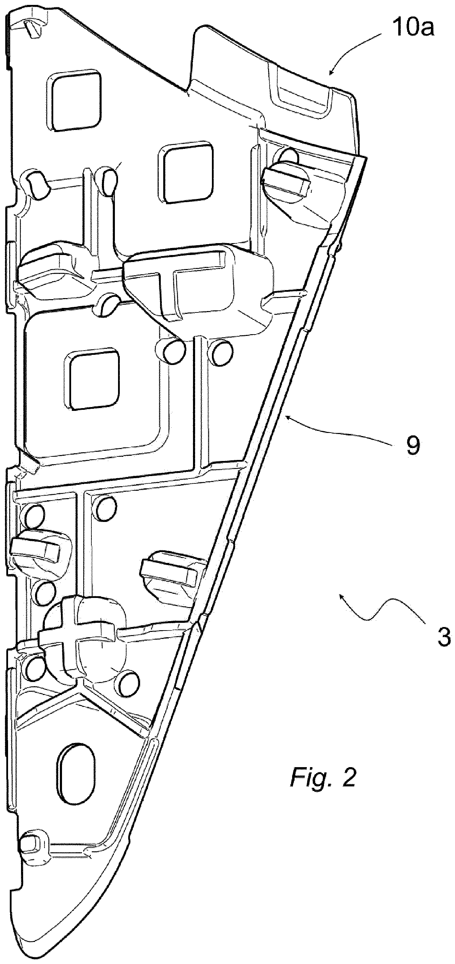

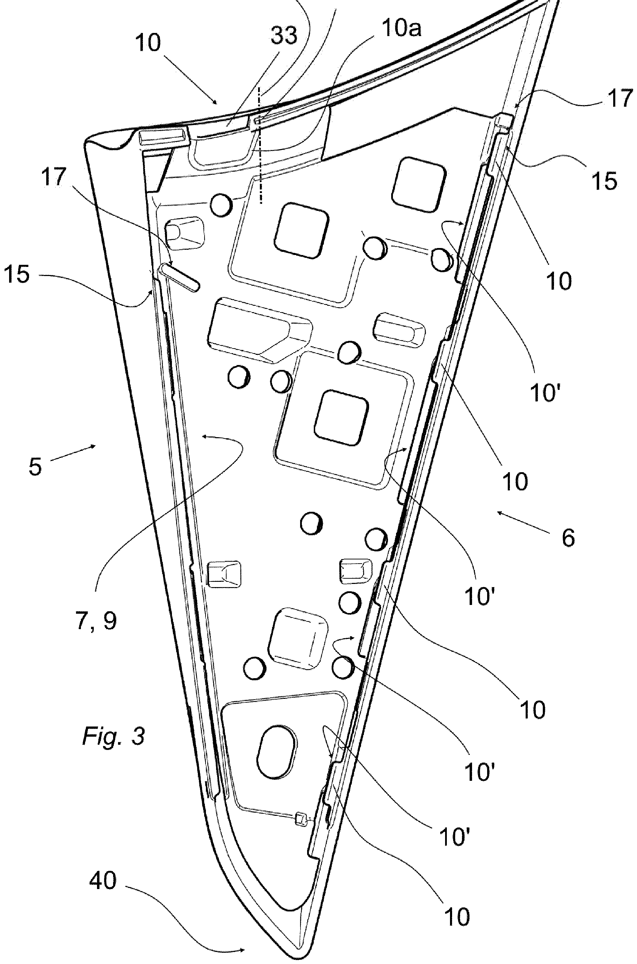

Die Fig. 1 zeigt ein schalenartiges, die Außenkontur bildendes Spoilerelement 1, wobei das Spoilerelement 1 eine Sichtseite 20 und eine dieser gegenüberliegende Innenseite 2 aufweist. Auf der Innenseite 2 kann ein mit dem Spoilerelement 1 verbindbares Trägerelement 3 (vgl. Fig. 2) zur Befestigung an der Karosserie oder einem weiteren Anbauteil des Kraftfahrzeuges angeordnet werden. Spoilerelement 1 und Trägerelement 3 bilden im verbundenen Zustand einen Seitenspoiler für ein Kraftfahrzeug. Das Spoilerelement 1 und das Trägerelement 3 sind jeweils länglich ausgebildet. Das Spoilerelement 1 weist entlang seiner Längsseiten 4a, 4b einen ersten Seitenrand 5 und einen diesem gegenüberliegenden zweiten Seitenrand 6 auf. Der erste Seitenrand 5 und/oder der zweite Seitenrand 6 können in der Einbaulage am Kraftfahrzeug zumindest teilweise sichtbar sein. Der erste Seitenrand 5 ist hierbei zumindest abschnittsweise durch einen Umbug 5a gebildet, der mit der Innenseite 2 eine Hinterschneidung 7 bildet. Der zweite Seitenrand 6 ist durch einen von der Innenseite 2 abstehenden Flansch 8 gebildet. Das Trägerelement 3 erstreckt sich im verbundenen Zustand (vgl. Fig. 3) zumindest abschnittsweise von dem ersten Seitenrand 5 zu dem zweiten Seitenrand 6. Das Trägerelement 3 ist hierbei mit wenigstens einem Anlagebereich 9 über die Hinterschneidung 7 formschlüssig mit dem ersten Seitenrand 5 verbunden. Das Trägerelement 3 ist zusätzlich formschlüssig mit dem zweiten Seitenrand 6 verbunden, wobei hierfür wenigstens ein Fixierelement 10, das von dem Flansch 8 absteht und mit der Innenseite 2 einen Kanal 11 bildet, und wenigstens ein an dem Trägerelement 3 ausgebildetes und in dem Kanal 11 aufgenommenes Fixiergegenelement 10' vorgesehen (vgl. Fig. 3), wodurch das Spoilerelement 1 und das Trägerelement 3 in einer einzigen Fügerichtung miteinander verbindbar sind. Die entsprechende Fügerichtung ergibt sich, wenn man das Trägerelement 3 ähnlich einem Schwert in eine Schwertscheide in das Spoilerelement 1 einsteckt.

Das Spoilerelement 1 und das Trägerelement 3 sind länglich und auf eine Spitze 40 zulaufend ausgebildet. Der dritte Seitenrand 30 ist der der Spitze 40 gegenüberliegende Rand des Spoilerelements 1.

An einem zwischen dem ersten Seitenrand 5 und dem zweiten Seitenrand 6 des Spoilerelements 1 befindlichen dritten Seitenrand 30 ist ein von der Innenseite 2 des Spoilerelements 1 abstehender Abschlussflansch 31 vorgesehen, wobei der Abschlussflansch 31 ein Rastgegenelement 10b für ein an dem Trägerelement 3 ausgeformtes Rastelement 10a bildet oder dieses aufweist, sodass über die durch das Rastelement 10a und das Rastgegenelement 10b gebildete Rastverbindung 10 das Trägerelement 3 in dem Spoilerelement 1 fixiert ist (vgl. Fig. 3).

Das Spoilerelement 1 weist wenigstens einen Anschlag 15 und das Trägerelement 3 wenigstens einen mit dem Anschlag 15 zusammenwirkenden Gegenanschlag 17 auf (vgl. Fig. 3).

Das Spoilerelement 1 und das Trägerelement 3 sind jeweils als Kunststoff-Spritzgussteil oder als 3D-Druckteil ausgebildet.

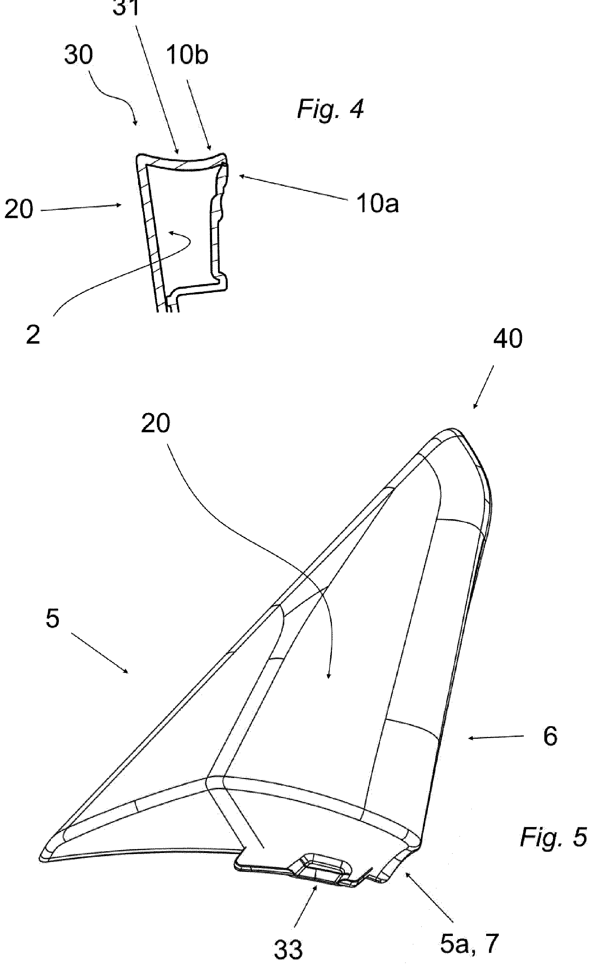

Die Fig. 3 zeigt eine dreidimensionale Darstellung des Seitenspoilers für ein Kraftfahrzeug mit dem Spoilerelement 1 und dem mit diesem verbundenen Trägerelement 3. Hier ist noch einmal deutlicher erkennbar, wie das Spoilerelement 1 entlang seiner Längsseiten 4a, 4b einen ersten Seitenrand 5 und einen mit diesem gegenüberliegenden zweiten Seitenrand 6 aufweist, wobei der erste Seitenrand 5 zumindest abschnittsweise durch einen Umbug 5a gebildet ist, der mit der Innenseite 2 eine Hinterschneidung 7 bildet, und wobei der zweite Seitenrand 6 durch einen von der Innenseite 2 abstehenden Flansch 8 gebildet ist. Hierbei erstreckt sich das Trägerelement 3 im hier gezeigten verbundenen Zustand zumindest abschnittsweise von dem ersten Seitenrand 5 zu dem zweiten Seitenrand 6, wobei das Trägerelement 3 hierbei mit wenigstens einem Anlagebereich 9 über die Hinterschneidung 7 (vgl. auch Fig. 5) formschlüssig mit dem ersten Seitenrand 5 verbunden ist. Das Trägerelement 3 ist zusätzlich formschlüssig mit dem zweiten Seitenrand 6 verbunden, wobei hierfür wenigstens ein Fixierelement 10, das von dem Flansch 8 absteht und mit der Innenseite 2 einen Kanal 11 bildet, und wenigstens ein an dem Trägerelement 3 ausgebildetes und in dem Kanal 11 aufgenommenes Fixiergegenelement 10' vorgesehen ist. Das Spoilerelement 1 und das Trägerelement 3 sind in einer einzigen Fügerichtung miteinander verbindbar. Das an einem zwischen dem ersten Seitenrand 5 und dem zweiten Seitenrand 6 des Spoilerelements 1 befindlichen dritten Seitenrand 30 ein von der Innenseite 2 des Spoilerelements 1 abstehender Abschlussflansch 31 vorgesehen ist, wobei der Abschlussflansch 31 ein Rastgegenelement 10b für ein an dem Trägerelement 3 ausgeformtes Rastelement 10a bildet oder dieses aufweist, sodass über die durch das Rastelement 10a und das Rastgegenelement 10b gebildete Rastverbindung 10 das Trägerelement 3 in dem Spoilerelement 1 fixiert ist.

Die Fig. 4 zeigt die Schnittdarstellung gemäß der Schnittlinie S in Fig. 3. Hier ist im Detail noch einmal der dritten Seitenrand 30 und der von der Innenseite 2 des Spoilerelements 1 abstehende Abschlussflansch 31 erkennbar. Der Abschlussflansch 31 bildet ein Rastgegenelement 10b für das an dem Trägerelement 3 ausgeformtes Rastelement 10a. Über die durch das Rastelement 10a und das Rastgegenelement 10b gebildete Rastverbindung 10 ist das Trägerelement 3 in dem Spoilerelement 1 fixiert.

Die Fig. 5 zeigt den Seitenspoiler für ein Kraftfahrzeug in einer von Fig. 3 abweichenden dreidimensionalen Ansicht. Hier ist die Sichtseite 20 des Spoilerelements 1 dargestellt. Gut erkennbar ist, dass der Abschlussflansch 31 wenigstens eine Unterbrechung 33 aufweist, die einen Zugang zu der durch das Rastelement 10a und das Rastgegenelement 10b gebildeten Rastverbindung 10 ermöglicht, um diese von außen wieder lösen zu können.

## Patentansprüche

1. Seitenspoiler für ein Kraftfahrzeug mit
- einem schalenartigen, die Außenkontur bildenden Spoilerelement (1), wobei das Spoilerelement (1) eine Sichtseite (20) und eine dieser gegenüberliegende Innenseite (2) aufweist,
- einem auf der Innenseite (2) angeordneten und mit dem Spoilerelement (1) verbindbaren Trägerelement (3) zur Befestigung an der Karosserie oder einem weiteren Anbauteil des Kraftfahrzeuges,
wobei das Spoilerelement (1) und das Trägerelement (3) länglich ausgebildet sind,
wobei das Spoilerelement (1) entlang seiner Längsseiten (4a, 4b) einen ersten Seitenrand (5) und einen diesem gegenüberliegenden zweiten Seitenrand (6) aufweist, wobei der erste Seitenrand (5) zumindest abschnittsweise durch einen Umbug (5a) gebildet ist, der mit der Innenseite (2) eine Hinterschneidung (7) bildet, und wobei der zweite Seitenrand (6) durch einen von der Innenseite (2) abstehenden Flansch (8) gebildet ist und,
wobei sich das Trägerelement (3) im verbundenen Zustand zumindest abschnittsweise von dem ersten Seitenrand (5) zu dem zweiten Seitenrand (6) erstreckt, wobei das Trägerelement (3) hierbei mit wenigstens einem Anlagebereich (9) über die Hinterschneidung (7) formschlüssig mit dem ersten Seitenrand (5) verbunden ist,
**dadurch gekennzeichnet, dass**
das Trägerelement (3) zusätzlich formschlüssig mit dem zweiten Seitenrand (6) verbunden ist, wobei hierfür wenigstens ein Fixierelement (10), das von dem Flansch (8) absteht und mit der Innenseite (2) einen Kanal (11) bildet, und wenigstens ein an dem Trägerelement (3) ausgebildetes und in dem Kanal (11) aufgenommenes Fixiergegenelement (10') vorgesehen ist, wodurch das Spoilerelement (1) und das Trägerelement (3) in einer einzigen Fügerichtung miteinander verbindbar sind und, das an einem zwischen dem ersten Seitenrand (5) und dem zweiten Seitenrand (6) des Spoilerelements (1) befindlichen dritten Seitenrand (30) ein von der Innenseite (2) des Spoilerelements (1) abstehender Abschlussflansch (31) vorgesehen ist, wobei der Abschlussflansch (31) ein Rastgegenelement (10b) für ein an dem Trägerelement (3) ausgeformtes Rastelement (10a) bildet oder dieses aufweist, sodass über die durch das Rastelement (10a) und das Rastgegenelement (10b) gebildete Rastverbindung (10) das Trägerelement (3) in dem Spoilerelement (1) fixiert ist.

2. Seitenspoiler nach Anspruch 1, **dadurch gekennzeichnet, dass** der Kanal (11) im Querschnitt U-förmig oder V-förmig ausgebildet ist.

3. Seitenspoiler nach Anspruch 1 oder 2, **dadurch gekennzeichnet, dass** das Spoilerelement (1) wenigstens einen Anschlag (15) und das Trägerelement (3) wenigstens einen mit dem Anschlag (15) zusammenwirkenden Gegenanschlag (17) aufweist.

4. Seitenspoiler einem der vorstehenden Ansprüche, **dadurch gekennzeichnet, dass** der Abschlussflansch (31) wenigstens eine Unterbrechung (33) aufweist, die einen Zugang zu der durch das Rastelement (10a) und das Rastgegenelement (10b) gebildeten Rastverbindung (10) ermöglicht, um diese von außen lösen zu können.

5. Seitenspoiler nach einem der vorstehenden Ansprüche, **dadurch gekennzeichnet, dass** das Spoilerelement (1) und / oder das Trägerelement (3) als Kunststoff-Spritzgussteil ausgebildet ist / sind.

6. Seitenspoiler nach einem der vorstehenden Ansprüche, **dadurch gekennzeichnet, dass** das Spoilerelement (1) und/oder das Trägerelement (3) länglich und auf eine Spitze (40) zulaufend ausgebildet ist oder sind.

7. Seitenspoiler nach Anspruch 6, **dadurch gekennzeichnet, dass** der dritte Seitenrand (30) der der Spitze (40) gegenüberliegende Rand des Spoilerelements (1) ist.

8. Hauptspoiler mit wenigstens einem mit diesem verbundenen Seitenspoiler nach einem der vorstehenden Ansprüche.

9. Kraftfahrzeug mit einem Seitenspoiler nach einem der vorstehenden Ansprüche 1 bis 7 oder mit einem Hauptspoiler nach Anspruch 8.

## Claims

1. Side spoiler for a motor vehicle, having
- a shell-like spoiler element (1) forming the outer contour, wherein the spoiler element (1) has a visible side (20) and an inner side (2) opposite said visible side,
- a carrier element (3) that is arranged on the inner side (2) and can be connected to the spoiler element (1) in order to be fastened to the bodywork or another body styling part of the motor vehicle,
wherein the spoiler element (1) and the carrier element (3) are elongate,
wherein the spoiler element (1) comprises, along its longitudinal sides (4a, 4b), a first side edge (5) and a second side edge (6) opposite said first side edge, wherein the first side edge (5) is formed at least in portions by a bend (5a) which forms an undercut (7) together with the inner side (2), and wherein the second side edge (6) is formed by a flange (8) projecting from the inner side (2), and,
wherein, when it is connected, the carrier element (3) extends from the first side edge (5) to the second side edge (6) at least in portions, wherein, in so doing, the carrier element (3) is connected to the first side edge (5) in a form-fitting manner by means of the undercut (7) in at least one contact region (9),
**characterised in that**
the carrier element (3) is additionally connected to the second side edge (6) in a form-fitting manner, wherein at least one fixing element (10), which projects from the flange (8) and forms a channel (11) together with the inner side (2), and at least one fixing counter-element (10'), which is formed on the carrier element (3) and is received in the channel (11), is provided for this purpose, as a result of which the spoiler element (1) and the carrier element (3) can be interconnected in a single joining direction, and that an end flange (31) projecting from the inner side (2) of the spoiler element (1) is provided on a third side edge (30), located between the first side edge (5) and the second side edge (6) of the spoiler element (1), wherein the end flange (31) forms or comprises a latching counter-element (10b) for a latching element (10a) formed on the carrier element (3), such that the carrier element (3) is fixed in the spoiler element (1) by the latching connection (10) formed by the latching element (10a) and the latching counter-element (10b).

2. Side spoiler according to claim 1, **characterised in that** the channel (11) is U-shaped or V-shaped in cross section.

3. Side spoiler according to claim 1 or 2, **characterised in that** the spoiler element (1) comprises at least one stop (15) and the carrier element (3) comprises at least one counter-stop (17) that interacts with the stop (15).

4. Side spoiler according to any of the preceding claims, **characterised in that** the end flange (31) comprises at least one gap (33), which allows access to the latching connection (10) formed by the latching element (10a) and the latching counter-element (10b) in order to make it possible to release said connection from the outside.

5. Side spoiler according to any of the preceding claims, **characterised in that** the spoiler element (1) and/or the carrier element (3) is/are designed as plastics injection-moulded parts.

6. Side spoiler according to any of the preceding claims, **characterised in that** the spoiler element (1) and/or the carrier element (3) is/are elongate and is/are designed to taper to a point (40).

7. Side spoiler according to claim 6, **characterised in that** the third side edge (30) is the edge of the spoiler element (1) opposite the point (40).

8. Main spoiler comprising at least one side spoiler according to any of the preceding claims, which is connected thereto.

9. Motor vehicle comprising a side spoiler according to any of the preceding claims 1 to 7 or comprising a main spoiler according to claim 8.

## Revendications

1. Déflecteur latéral pour un véhicule automobile, avec
- un élément de déflecteur (1) de type coque, formant le contour extérieur, dans lequel l'élément de déflecteur (1) présente une face visible (20) et une face intérieure (2) faisant face à celle-ci,
- un élément de support (3) disposé sur la face intérieure (2) et pouvant être relié à l'élément de déflecteur (1), destiné à être fixé au niveau de la carrosserie ou d'un autre composant rapporté du véhicule automobile,
dans lequel l'élément de déflecteur (1) et l'élément de support (3) sont réalisés de manière allongée,
dans lequel l'élément de déflecteur (1) présente le long de ses côtés longitudinaux (4a, 4b) un premier bord latéral (5) et un deuxième bord latéral (6) lui faisant face, dans lequel le premier bord latéral (5) est formé au moins par endroits par un repli (5a), qui forme avec la face intérieure (2) une contre-dépouille (7), et dans lequel le deuxième bord latéral (6) est formé par un flasque (8) dépassant de la face intérieure (2), et
dans lequel l'élément de support (3) s'étend dans l'état relié au moins par endroits depuis le premier bord latéral (5) vers le deuxième bord latéral (6), dans lequel l'élément de support (3) est relié dans ce cadre par complémentarité de forme au premier bord latéral (5) par au moins une zone d'appui (9) par l'intermédiaire de la contre-dépouille (7),
l'élément de support (3) est relié en supplément par complémentarité de forme au deuxième bord latéral (6), dans lequel à cet effet au moins un élément de blocage (10), qui dépasse du flasque (8) et forme avec la face intérieure (2) un canal (11), et au moins un contre-élément de blocage (10') réalisé au niveau de l'élément de support (3) et logé dans le canal (11) sont prévus, ce qui permet de pouvoir relier l'un à l'autre l'élément de déflecteur (1) et l'élément de support (3) dans une unique direction d'assemblage et
un flasque de terminaison (31) dépassant de la face intérieure (2) de l'élément de déflecteur (1) est prévu au niveau d'un troisième bord latéral (30) se trouvant entre le premier bord latéral (5) et le deuxième bord latéral (6) de l'élément de déflecteur (1), dans lequel le flasque de terminaison (31) forme un contre-élément d'enclenchement (10b) pour un élément d'enclenchement (10a) formé au niveau de l'élément de support (3) ou présente celui-ci de sorte que l'élément de support (3) est bloqué dans l'élément de déflecteur (1) par l'intermédiaire de la liaison d'enclenchement (10) formée par l'élément d'enclenchement (10a) et le contre-élément d'enclenchement (10b).

2. Déflecteur latéral selon la revendication 1, **caractérisé en ce que** le canal (11) est réalisé de manière présenter une forme en U ou une forme en V dans la section transversale.

3. Déflecteur latéral selon la revendication 1 ou 2, **caractérisé en ce que** l'élément de déflecteur (1) présente au moins une butée (15) et l'élément de support (3) présente au moins une contre-butée (17) coopérant avec la butée (15).

4. Déflecteur latéral selon l'une quelconque des revendications précédentes, **caractérisé en ce que** le flasque de terminaison (31) présente au moins une interruption (33), qui permet un accès à la liaison par enclenchement (10) formée par l'élément d'enclenchement (10a) et le contre-élément d'enclenchement (10b) pour pouvoir défaire celle-ci depuis l'extérieur.

5. Déflecteur latéral selon l'une quelconque des revendications précédentes, **caractérisé en ce que** l'élément de déflecteur (1) et/ou l'élément de support (3) est réalisé/sont réalisés en tant que pièce moulée par injection en matière plastique.

6. Déflecteur latéral selon l'une quelconque des revendications précédentes, **caractérisé en ce que** l'élément de déflecteur (1) et/ou l'élément de support (3) est réalisé ou sont réalisés de manière allongée et de manière à converger sur une pointe (40).

7. Déflecteur latéral selon la revendication 6, **caractérisé en ce que** le troisième bord latéral (30) est le bord, faisant face à la pointe (40), de l'élément de déflecteur (1).

8. Déflecteur principal avec au moins un déflecteur latéral relié à celui-ci selon l'une quelconque des revendications précédentes.

9. Véhicule automobile avec un déflecteur latéral selon l'une quelconque des revendications 1 à 7 ou avec un déflecteur principal selon la revendication 8.
